# EUROPEAN PATENT APPLICATION

(11) **EP 3 001 334 A1**
(43) Date of publication of application: **30.03.2016**
(21) Application number: 15002057.6
(22) Date of filing: 09.07.2015
(51) Int. Cl.: G06F 17/30

(54) **SYSTEMS AND METHODS TO REPACKAGE WEB SITE RESOURCES**

(30) Priority: 29.09.2014 US 201414500101
(71) Applicant: SAP Portals Israel, Limited, 43657 Ra'anana (IL)
(72) Inventor: Himmelreich, Evgeny, 69190 Walldorf (DE)
(74) Representative: Müller-Boré & Partner Patentanwälte PartG mbB

(57) **Abstract**

According to some embodiments, a set of web site resources associated with a web site may be determined. A sub-set of the web site resources may be identified as being associated with an initial rendering of the web site, and a first package may be created containing the sub-set of web site resources. A second package containing the remaining web site resources may also be created. When a request to display the web site is received from a remote user device, it may be automatically arranged for a web server to transmit the first package to the remote user device without transmitting the second package.

## Description

### FIELD

Some embodiments relate to systems and methods associated with web sites, such as business portals. More specifically, some embodiments are directed to systems and methods wherein web site resources may be packaged and/or repackaged as appropriate.

### BACKGROUND

When a user device accesses a web site, a web server associated with the web site may download web site resources to the user device. For example, the web server might download a package containing JavaScript frameworks, Cascading Style Sheet ("CSS") files, font information, *etc.,* to the user device. After the web site resources are downloaded, a web browser executing at the user device may execute site-specific logic and render the web site for the user. In some cases, relatively large web site resources are used for many different web sites (*e.g*., to standardize products and increase the speed at which web sites can be created by designers). Moreover, some of the web site resources may not be needed to initially render the web site *(e.g.,* a specific user control or font might not be used by that particular web site). Such an approach can lead to slow response times as un-needed web site resources are downloaded to user devices.

Accordingly, methods and mechanisms to efficiently, accurately, and/or automatically package web resource components may be provided in accordance with some embodiments described herein.

### SUMMARY

Some embodiments provide a system, method, program code and/or means to automatically package web site resources. According to some embodiments, a set of web site resources associated with a web site may be determined. A sub-set of the web site resources may be identified as being associated with an initial rendering of the web site, and a first package may be created containing the sub-set of web site resources. A second package containing the remaining web site resources may also be created. When a request to display the web site is received from a remote user device, it may be automatically arranged for a web server to transmit the first package to the remote user device without transmitting the second package.

With these and other advantages and features that will become hereinafter apparent, further information may be obtained by reference to the following detailed description and appended claims, and to the figures attached hereto.

### BRIEF DESCRIPTION OF THE DRAWINGS

FIG. 1 is a block diagram of a system architecture.
FIG. 2 illustrates a timeline associated with web site loading.
FIG. 3 illustrates a timeline associated with web site loading according to some embodiments.
FIG. 4 is a block diagram of a system architecture in accordance with some embodiments.
FIG. 5 is a flow diagram of a process in accordance with some embodiments.
FIG. 6 is a flow diagram of an automatic static separation process in accordance with some embodiments.
FIG. 7 is a block diagram of a repackaging platform according to some embodiments.
FIG. 8 illustrates a web site resource database that might be stored in accordance with some embodiments.
FIG. 9 is a flow diagram of a dynamic separation process according to some embodiments.
FIG. 10 illustrates a graphical user interface that may be associated with a packaging platform in accordance with some embodiments.

### DETAILED DESCRIPTION

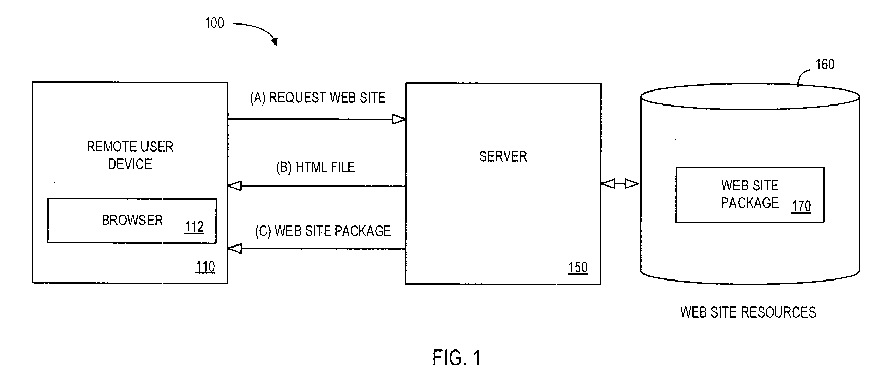

When a user device, such as a Personal Computer ("PC") or smartphone, accesses a web site, a web server associated with the web site may download web site resources to the user device. For example, FIG. 1 is a block diagram of a system 100 architecture. A web server 150 may receive a request for a web site from a remote user device 110 executing a browser 112 at (A). The web server 150 may respond to the request by transmitting a HyperText Markup Language ("HTML") file to the remote user device 110 at (B). The web server 150 may then access a web site resources storage unit or database 160 and download a web site package 160 containing JavaScript frameworks, CSS files, font information, *etc.,* to the remote user device 110 at (C). After the web site package 170 is downloaded, the browser 112 may execute site-specific logic and render the web site for the user. In some cases, relatively large web site resources are used for many different web sites (*e.g.,* to standardize products and increase the speed at which web sites can be created by designers). By way of examples, frameworks such as jQuery (a cross-platform JavaScript library designed to simplify client-side scripting), extJS (a JavaScript application framework for building interactive web applications), and SAPUI5 (a platform for developing rich user interfaces for modern Web business applications) may be included in the web site package 170 that is downloaded to the remote user device 110. Moreover, some of the web site resources may not be needed to initially render the web site (*e.g.,* a specific user control or font might not be used by that particular web site).

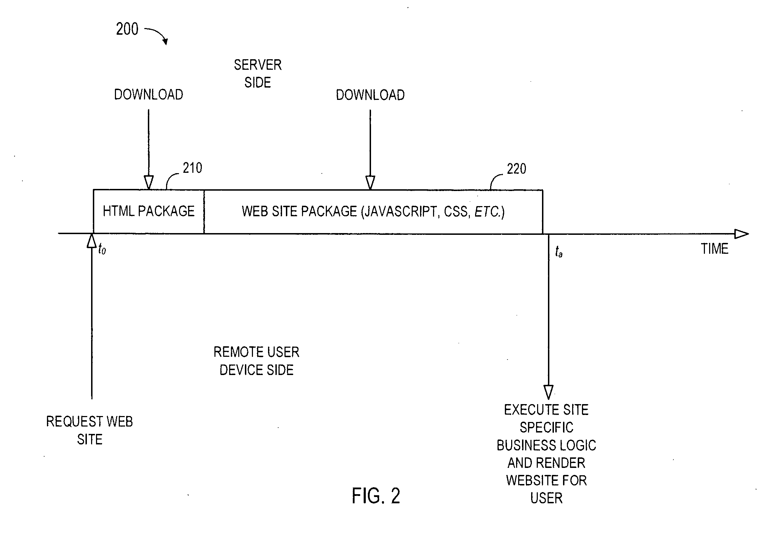

Such an approach can lead to slow response times as un-needed web site resources are downloaded to user devices. Consider, for example, FIG. 2 which illustrates a timeline 200 associated with web site loading. At time *t₀,* a remote user device may request a web site. The web server downloads an HTML package 210 followed by a web site package 220. After the download of the web site package 220 is complete, the user device executes site specific business log and renders at web site for the user at time *tₐ*. If un-needed resources are included in the web site package 220, the rending of the web site will be unnecessarily delayed (*tₐ* may be larger than it needs to be).

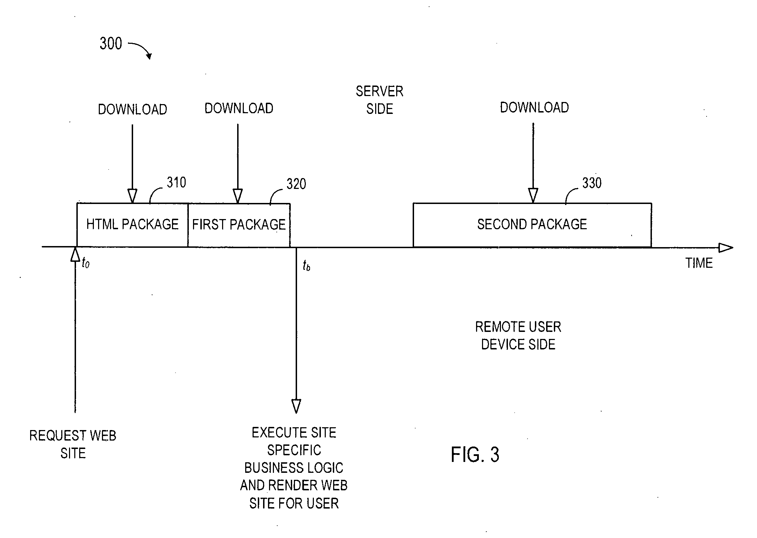

Embodiments of the present invention may improve the performance of such a system. For example, FIG. 3 illustrates 300 a timeline associated with web site loading according to some embodiments. As before, at time *t₀* a remote user device may request a web site and the web server downloads an HTML package 310. In this embodiment, the web server then downloads a first web package 320. The first web package 320 may, for example, include only those resources that are needed to initially render the web site. After the download of the first package 320 is complete, the user device executes site specific business log and renders at web site for the user at time *t_{b}*. A second package 330 may later be downloaded from the web server to the user device (*e.g*., containing resources that are not needed to initially render the web site). As a result, the web site may be rendered more quickly for the user as compared to the approach illustrated in FIG. 2 (that is, *t_{b}* might be substantially less than *tₐ*). Note that the overall download time associated with the first and second packages 320, 330 may be substantially the same as the download time of the web page package 220 of FIG. 2.

Note that many factors may influence web application performance. For example, network connection bandwidth and/or latency between a client and the server may substantially influence web application performance. One potential result of high latency and/or small bandwidth (especially in mobile networks such as 2G or 3G), is that every roundtrip to the server may be very expensive from perceived and general application performance point of view. According to some embodiments of the present invention, a way of smart resource repackaging may be provided which facilitates a reduction in the number of network roundtrips from client to server that may be required. Moreover, embodiments may help keep response sizes as small as possible by packaging only the required resources.

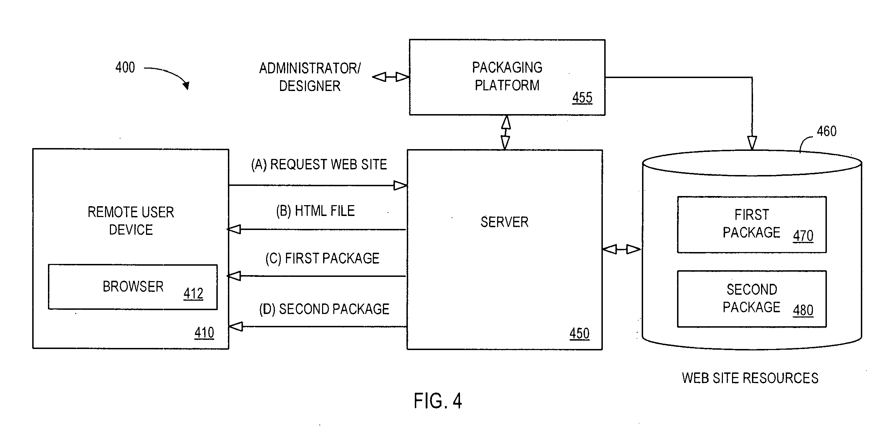

FIG. 4 is a block diagram of a system 400 architecture according to some embodiments described herein. In particular, a web server 450 may receive a request for a web site from a remote user device 410 executing a browser 412 at (A). As used herein, the phrase "web site" might refer to, for example, a web page, a business portal, or any other business transaction done in a web browser. The web server 450 may respond to the request by transmitting an HTML file to the remote user 410 device at (B).

According to this embodiment, the web server 450 communicates with a packaging platform 455 (which may also receive inputs from a web site administrator or designer). The packaging platform 455 may create first and second packages 470, 480 stored in a web site resources storage unit or database 460. The web server 450 may then download the first package 470 to the remote user device 110 at (C). After the first package 470 downloads, the browser 412 may execute site-specific logic and render the web site for the user. The web server 450 may then download the second package 480 to the remote user device 410 (*e.g.,* asynchronously with a delay) at (D).

By way of example only, server 450 might be associated with an Enterprise Resource Planning ("ERP") server, a business services gateway, a HyperText Transfer Protocol ("HTTP") server, a Client Relationship Management ("CRM") system, and/or an Advanced Business Application Programming ("ABAP") server.

According to some embodiments, the server 450 may directly communicate with one or more remote user devices 410 via the Internet. The user devices 410 may include one or more processors to receive electronic files and/or to execute applications and/or components (*e.g.,* a plug-in that is integrated to a smartphone). Note that FIG. 4 represents a logical architecture for the system 400 according to some embodiments, and actual implementations may include more or different components arranged in other manners. Moreover, each element described herein may be implemented by any number of devices in communication via any number of other public and/or private networks. Two or more of devices may be located remote from one another and may communicate with one another via any known manner of network(s) and/or a dedicated connection. Further, each device may comprise any number of hardware and/or software elements suitable to provide the functions described herein as well as any other functions. Other topologies may be used in conjunction with other embodiments. Note that the server 450 and packaging platform 455 might be located remote from each other or be co-located.

Any of the devices illustrated in FIG. 4, including the suggestion platform 460, may exchange information via any communication network which may be one or more of a Local Area Network ("LAN"), a Metropolitan Area Network ("MAN"), a Wide Area Network ("WAN"), a proprietary network, a Public Switched Telephone Network ("PSTN"), a Wireless Application Protocol ("WAP") network, a Bluetooth network, a wireless LAN network, and/or an Internet Protocol ("IP") network such as the Internet, an intranet, or an extranet. Note that any devices described herein may communicate via one or more such communication networks.

All systems and processes discussed herein may be embodied in program code stored on one or more computer-readable media. Such media may include, for example, a floppy disk, a CD-ROM, a DVD-ROM, magnetic tape, or solid state Random Access Memory ("RAM") or Read Only Memory ("ROM") storage units. Embodiments are therefore not limited to any specific combination of hardware and software.

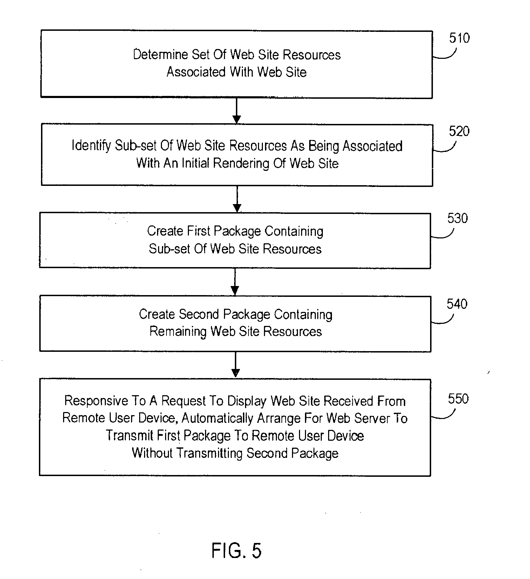

FIG. 5 is a flow diagram of a process 500 that might be associated with the illustration of the system 400 of FIG. 4 according to some embodiments. Note that all processes described herein may be executed by any combination of hardware and/or software. The processes may be embodied in program code stored on a tangible medium and executable by a computer to provide the functions described herein. Further note that the flow charts described herein do not imply a fixed order to the steps, and embodiments of the present invention may be practiced in any order that is practicable.

At 510, a set of web site resources associated with the web site may be determined. As used herein, the phrase "web site resources" may refer to, for example, JavaScript files and frameworks, CSS files, font information, Graphical User Interface ("GUI") elements, and/or other components. According to some embodiments, web site resources might be associated with frameworks, such as the, jQuery, extJS, and SAPUI5 frameworks.

At 520, a sub-set of the web site resources may be identified as being associated with an initial rendering of the web site. According to some embodiments, an identification of resources needed to initially render the web site may be a static separation process, such as a process that uses JavaScript code coverage reports to identify resources that are associated with an initial rendering of the web site. At 530, a first package containing the sub-set of web site resources may be created, and the remaining resources may be used to create the second package at 540.

Responsive to a request to display the web site received from a remote user device, it may be automatically arranged at 550 (*e.g*., by a computer processor of a web server) to transmit the first package to the remote user device without transmitting the second package. This might be performed, for example, after an HTML file, including references to some of the web site resources was to the remote user device. After the first package is transmitted at 550 (and the user device renders the web site), it may later be automatically arranged for the web server to transmit the second package to the remote user device (*e.g*., after an asynchronous delay.

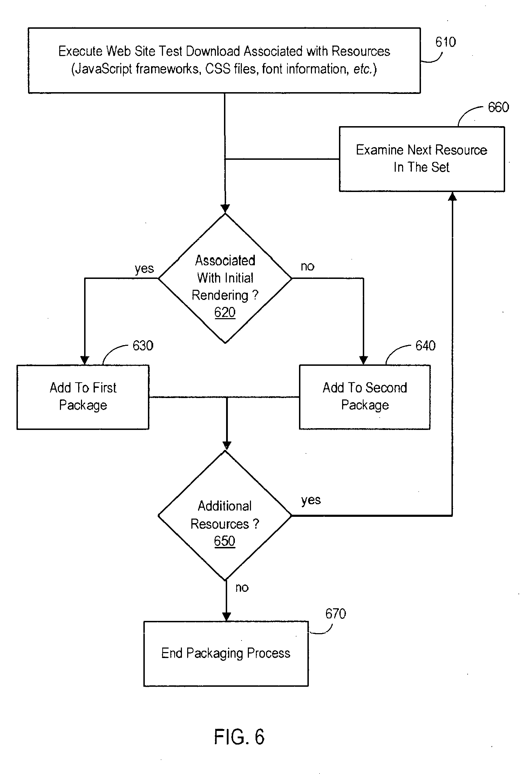

Some or all of a state separation process (used to identify which web site resources are appropriate for an initial rendering of a web site) may be automated. For example, FIG. 6 is a flow diagram of an automatic static separation process in accordance with some embodiments. At 610, one or more web site test downloads may be executed. For each web resource, a packaging platform may automatically analyze a report containing results of the web site test downloads. If the resource is identified as being associated with an initial rendering of the web site at 620, it is added to first, "pre-rendering" package at 630. If the resource is not identified as being associated with an initial rendering of the web site at 620, it is added to second, "post-rendering" package at 640.

If there are additional resources to be analyzed at 650, the process examines the next resource at 660 and the process continues at 620. When all resources have been analyzed at 650, the packing process ends at 670 and the first and second package are complete. Note that this process might be performed, for example, when a web page is initially designed or modified by a web designer, administrator and/or a central build and package system. According to some embodiments, the process may be periodically re-executed or re-executed upon a substantial change to the web site.

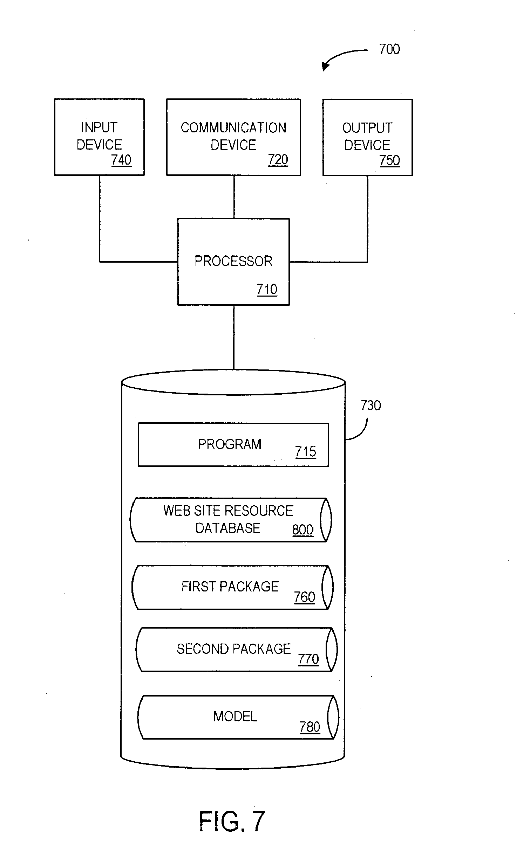

Embodiments described herein can be performed using a variety of different hardware configurations. For example, FIG. 7 is a block diagram overview of an apparatus 700 according to some embodiments. The apparatus 700 may be, for example, associated with a packaging and/or re-packaging platform. The apparatus 700 comprises a processor 710, such as one or more commercially available Central Processing Units (CPUs) in the form of one-chip microprocessors, coupled to a communication device 720 configured to communicate via a communication network (not shown in FIG. 7). The communication device 720 may be used, for example, to communicate with a web server. The apparatus 700 further includes an input device 740 (*e.g.,* a touchscreen, keyboard or computer mouse to enter information about web site resources) and an output device 750 (*e.g*., a display or printer to generate reports).

The processor 710 communicates with a storage device 730. The storage device 730 may comprise any appropriate information storage device, including combinations of magnetic storage devices (*e.g*., a hard disk drive), optical storage devices, and/or semiconductor memory devices. The storage device 730 stores a program 715 for controlling the processor 710. The processor 710 performs instructions of the program 715 and thereby operates in accordance with any of the embodiments described herein. For example, the processor 710 may determine a set of web site resources associated with a web site may be determined. The processor 710 may automatically identify a sub-set of the web site resources as being associated with an initial rendering of the web site (*e.g.,* are appropriate to download prior to rendering by a browser). A first package may be created by the processor 710 containing the sub-set of web site resources. Similarly, a second package containing the remaining web site resources may also be created by the processor 710. When a request to display the web site is received from a remote user device, it may be automatically arranged by the processor 710 for a web server to transmit the first package to the remote user device without transmitting the second package.

The program 715 may be stored in a compressed, uncompiled and/or encrypted format. The program 715 may furthermore include other program elements, such as an operating system, a database management system, and/or device drivers used by the processor 710 to interface with peripheral devices.

As used herein, information may be "received" by or "transmitted" to, for example: (i) the apparatus 700 from another device; or (ii) a software application or module within the apparatus 700 from another software application, module, or any other source.

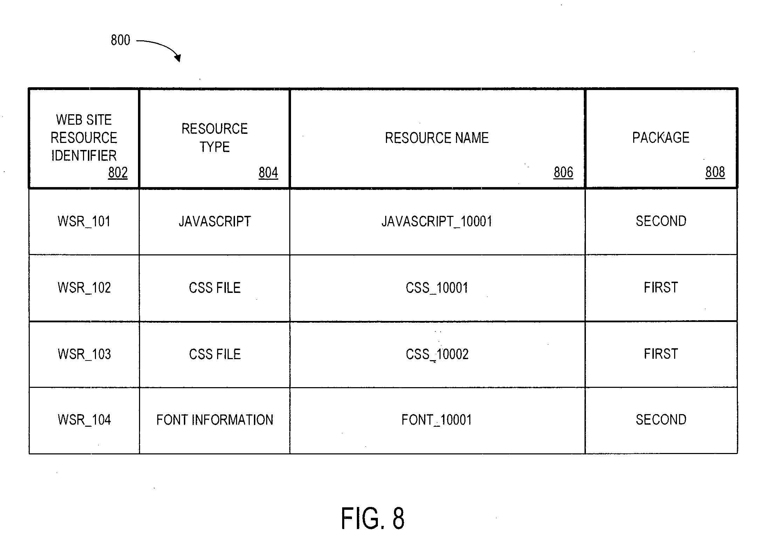

In some embodiments (such as shown in FIG. 7), the storage device 730 further stores a web site resource database 800, a first package 760, a second package 770, and a model 780 (*e.g.,* a predictive model might automatically determine some of the resources that should be included in the first package 760). An example of a database that may be used in connection with the packaging platform 700 will now be described in detail with respect to FIG. 8. Note that the database described herein is only an example, and additional and/or different information may be stored therein. Moreover, various databases might be split or combined in accordance with any of the embodiments described herein.

Referring to FIG. 8, a table is shown that represents the web site resource database 800 that may be stored at the apparatus 700 according to some embodiments. The table may include, for example, entries identifying web site resources that are associated with a web site. The table may also define fields 802, 804, 806, 808 for each of the entries. The fields 802, 804, 806, 808 may, according to some embodiments, specify: a web site resource identifier 802, a resource type 804, a resource name 806, and a package indication 808. The information in the criteria database 800 may be created and updated, for example, based on information received from a system designer or an automated process, logic, algorithm, or model.

The web resource identifier 802 may be, for example, a unique alphanumeric code identifying a web resource (JavaScript framework, CSS file, *etc.*) associated with a web page. The resource type 804 indicates a type of resource and the name 804 may be a file name, pointer, locator, storage location, *etc.* associated with the resource. The package indication 808 might reflect that the resource belongs in the "first package" (*e.g*., it is required or desired for an initial rendering) or the "second package" (*e.g.,* it is not necessary for an initial rendering).

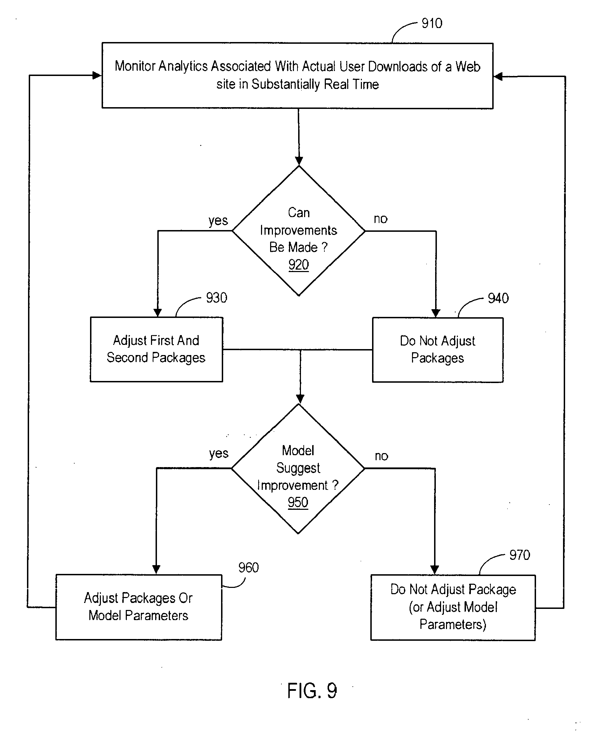

Note that in addition to, or instead of, the static separation process described with respect to FIG. 6, other approaches may be used to determine which resources should be provided to the browser prior to rendering. For example, FIG. 9 is a flow diagram of a dynamic and active separation process according to some embodiments. At 910, analytics data associated with actual user downloads of a web site may be automatically monitored (*e.g*., by a computer processor of a packaging platform) in substantially real time. If the analytics indicate that an improvement can be made at 920, the first and second packages may be dynamically and automatically adjusted at 930 (*e.g.,* the resources may be repackaged "on the fly"). By way of example, consider a dashboard display that includes a table User Interface ("UI") component and a pie chart UI component. In this case, both a table UI resource and pie chart UI resource might reside in the first package. If the pie chart UI component is later removed from dashboard display, a review of the analytics data may reveal that the pie chart UI resource should be moved from the first package to the second package (and thus improve the load time performance of the dashboard display).

If the analytics do not indicate that an improvement can be made at 920, the process continues. According to some embodiments, a model or other automated process may detect or suggest how resources should be packaged. For example, if a model suggests an improvement at 950 (*e.g.,* by moving a resource from one package to another), the suggestion may be implemented and/or the model might be adjusted at 960 (*e.g.,* so that the model will not make similar suggestions in the future). If the model does not suggest an improvement at 950, the packages may be left unaltered and/or the model might be adjusted at 960 (*e.g*., so that the model will more appropriate and/or helpful suggestions in the future).

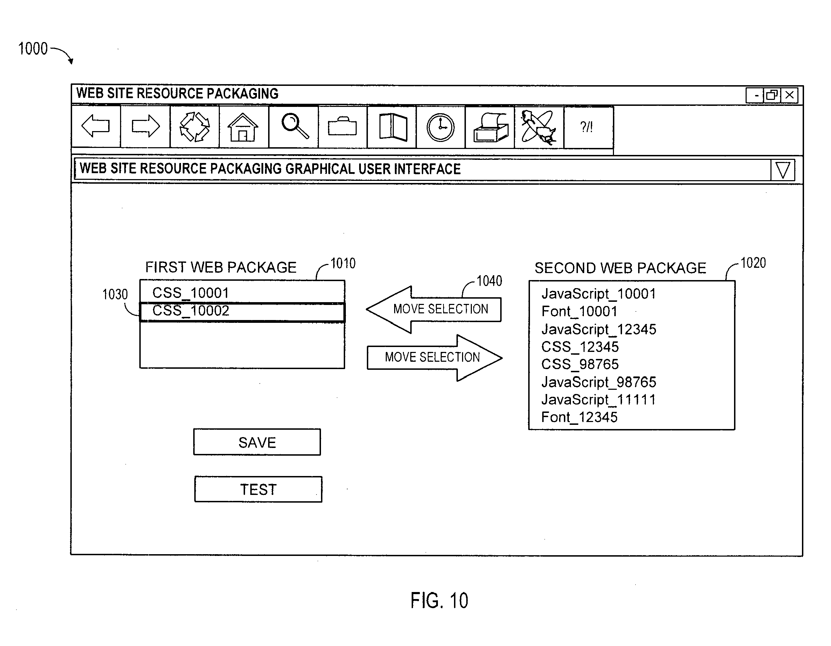

According to some embodiments, a user may view and/or alter packaging and re-packaging decisions. For example, FIG. 10 illustrates a GUI display 1000 that may be associated with a packaging platform in accordance with some embodiments. The display 1000 includes a list of resources in a first package 1010 and a list of resources in a second package 1020. A user might make a selection 1030 of one or more of the resources and activate an icon to move the selected resources between the lists 1010, 1020. According to some embodiments, a user might save his or her changes (*e.g*., to be used when clients request a web page) and/or a test may be performed using the packages he or she has established (*e.g.,* to measure a web page load time improvement resulting from the changes).

Thus, some embodiments may provide for substantial improvements in web site load times. This may provide users with a more robust, smooth, and enjoyable interactive experience.

Although embodiments have been described with respect to business systems and databases, note that embodiments may be associated with other types of enterprise data. For example, packaging and re-packaging of resources associated with with financial, governmental, educational, and/or medical processes and systems may be facilitated in accordance with any of the embodiments described herein.

Moreover, while embodiments have been illustrated using particular types of tables and databases, embodiments may be implemented in any other of a number of different ways. For example, some embodiments might be associated with the creation of more than two packages for a web site. Further, while examples have been provided for particular types of computer displays, note that embodiments may be associated any number of different types of displays. For example, set-top television boxes, smartphones, *etc*. may benefit from embodiments described herein.

Embodiments have been described herein solely for the purpose of illustration. Persons skilled in the art will recognize from this description that embodiments are not limited to those described, but may be practiced with modifications and alterations limited only by the spirit and scope of the appended claims.

## Claims

1. A computer-implemented method associated with a web site, comprising:
determining a set of web site resources associated with the web site;
identifying a sub-set of the web site resources as being associated with an initial rendering of the web site;
creating a first package containing the sub-set of web site resources;
creating a second package containing the remaining web site resources; and
responsive to a request to display the web site received from a remote user device, automatically arranging for a computer processor of a web server to transmit the first package to the remote user device without transmitting the second package.

2. The method of claim 1, wherein the set of web site resources include at least one of: (i) JavaScript files, (ii) JavaScript frameworks, (iii) cascading style sheet files, (iv), font information, and (v) graphical user interface elements.

3. The method of claim 1 or 2, wherein said identifying comprises:
executing a plurality of web site test downloads; and
automatically analyzing, by a computer processor of a packaging platform, a report containing results of the web site test downloads.

4. The method of any one of claims 1 to 3, wherein said identifying comprises:
automatically monitoring, by a computer processor of a packaging platform, analytics data associated with actual user downloads of the web site in substantially real time; and
dynamically moving web site resources between the first package and the second package based on said analytics data.

5. The method of any one of claims 1 to 4, further comprising:
automatically arranging for the web server to transmit the second package to the remote user device after an asynchronous delay.

6. The method of any one of claims 1 to 5, further comprising:
prior to arranging for the web server to transmit the first package to the remote user device, transmitting a hypertext markup language file, including references to at least one of the web site resources, to the remote user device.

7. The method of any one of claims 1 to 6, wherein at least some of the web site resources are associated with: (i) jQuery, (ii) extJS, and (iii) SAPUI5.

8. A non-transitory, computer-readable medium storing program code executable by a computer processor to perform a method associated with a web site according to any one of claims 1 to 7.

9. A system associated with a web site, comprising:
a packaging platform adapted to (i) determine a set of web site resources associated with the web site, (ii) identify a sub-set of the web site resources as being associated with an initial rendering of the web site, and (iii) create a first package containing the sub-set of web site resources, and (iv) create a second package containing the remaining web site resources; and
a web server coupled to the packaging platform and adapted to, responsive to a request to display the web site received from a remote user device, automatically transmit the first package to the remote user device without transmitting the second package.

10. The system of claim 9, wherein the set of web site resources include at least one of: (i) JavaScript files, (ii) JavaScript frameworks, (iii) cascading style sheet files, (iv), font information, and (v) graphical user interface elements.

11. The system of claim 9 or 10, wherein said identifying comprises:
executing a plurality of web site test downloads; and
automatically analyzing, by a packaging platform, a report containing results of the web site test downloads.

12. The system of any one of claims 9 to 11, wherein said identifying comprises:
monitoring analytics data associated with actual user downloads of the web site in substantially real time; and
dynamically moving web site resources between the first package and the second package based on said analytics data.

13. The system of any one of claims 9 to 12, further comprising:
automatically arranging for the web server to transmit the second package to the remote user device after an asynchronous delay.

14. The system of any one of claims 9 to 13, further comprising:
prior to arranging for the web server to transmit the first package to the remote user device, transmitting a hypertext markup language file, including references to at least one of the web site resources, to the remote user device.

15. The system of any one of claims 9 to 14, wherein at least some of the web site resources are associated with: (i) jQuery, (ii) extJS, and (iii) SAPUI5.
